# EUROPEAN PATENT APPLICATION

(11) **EP 2 006 047 A2**
(43) Date of publication of application: **24.12.2008**
(21) Application number: 06731787.5
(22) Date of filing: 13.04.2006
(51) Int. Cl.: B23P 15/28

(54) **PLATE-LIKE CUTTING TOOL AND FIXING JIG**

(71) Applicant: KANEFUSA KABUSHIKI KAISHA, Niwa-gun, Aichi 480-0192 (JP)
(72) Inventor: NAKAMURA, Hiroshi, Niwa-gun, Aichi 4800192 (JP); WATANABE,Hiroshi c/o Kanefusa Kabushiki Kaisha, Aichi 480-0192 (JP)
(74) Representative: Prüfer & Partner GbR European Patent Attorneys
(86) International application number: PCT/JP2006/307851
(87) International publication number: WO 2007/122679

(57) **Abstract**

A plate-like cutting tool produced at a low cost and having less strain is provided. A planer knife basically includes a base 12 formed of a steel, and cutting blades 14, 14 to be laser-welded along both lengthwise end edge portions 12a, 12b in a lengthwise direction of the base 12. A recess 22 engageable with a to-be-engaged portion 24a of a base supporting section 24 of a fixing jig 20 is provided at a back side 18 of the base 12. In the process of manufacturing the planer knife, with the base 12 engaged with the to-be-engaged portion 24a, the base 12 is fixed onto the base supporting section 22, and is held and fixed in a pressed state by a first base fixing tool 36. The cutting blade 14 is fixed in abutment on the lengthwise end edge portion 12a via a cutting blade fixing tool 46. Then, mainly the base 12 is laser-welded at a contact portion between the lengthwise end edge portion 12a and the cutting blade 14, thereby attaching the cutting blade 14 to the base 12.

## Description

### Technical Field

The present invention relates to a plate-like cutting tool in which cutting blades to be blade portions are welded to lengthwise end edge portions of a base to be a rectangular plate-like base portion to form cutting edges, and a fixing jig which positions and fixes a base and a cutting blade at the time of securely adhering the base and the cutting blade.

### Background Art

In a wood planing machine which makes the surface of a to-be-cut member flat in wood working or similar working, a cylindrical cutting tool called planer head is rotatably disposed and a plate member or the like is cut with planer knives provided on the outer surface of the planer head. The conventional planer knife to be used in such plane cutting is such that as illustrated in Patent Document 1, for example, both lengthwise end edge portions of a cemented carbide or the like formed into a rectangular plate shape are polished to form cutting edges on both lengthwise end edge portions. Normally, about four planer knives are mounted to the planer head, and the cutting edges of each planer knife slightly protrude from the outer surface of the planer head. The planer knife illustrated as the conventional art has blade portions formed at both lengthwise end edge portions along the lengthwise direction, so that when the cutting edge of one of the blade portions becomes unusable through usage in plane cutting, the planer knife is mounted in the opposite direction to ensure use of the cutting edge of the other blade portion. Further, when the cutting edge of the other blade portion becomes unusable too, the planer knife itself is replaced, and the used planer knife is disposed.
Patent Document 1: Japanese Utility Model Publication No. Hei 2-23371

### Disclosure of Invention

### Problems to be Solved by the Invention

The planer knife illustrated as the conventional art is designed in such a way that when cutting edges on both sides become unusable, the whole planer knife is to be replaced. However, the cemented carbide which forms the planer knife is more expensive than a steel or the like, and replacement of the whole planer knife made of a cemented carbide for wearing of blade portions whose ratio to the entire cutting tool is small leads to poor economical efficiency and increases the running cost.

In this respect, a base which is the main part of the planer knife may be formed of a low-cost steel and cutting blades of a cemented carbide to be blade portions may be separately welded to the base, thereby suppressing the manufacturing cost of the whole planer knife. When the base and the cutting blade are formed of different materials, however, the coefficients of thermal expansion of both members naturally differ from each other, producing a difference between the amounts of deformation of both members at the time of welding and cooling. That is, because generally a steel has a higher coefficient of thermal expansion than a cemented carbide, the steel has a relatively large expansion/contraction change at the time of heating and cooling than the cemented carbide, so that large internal stress remains on the planer knife after welding. The remaining stress brings about a problem such that uncorrectable strain occurs on the entire planer knife or cracks are produced on the cutting blade. Therefore, a practical planer knife manufactured by welding a cutting blade formed of a sintered hard material to a base formed of a steel has not yet provided till today. While it is possible to suppress strain and cracks occurring at the time of jointing the aforementioned cutting blade by jointing the cutting blade to the base by brazing carried out at a lower temperature than welding, it is limited to a cutting blade whose cross-sectional area is considerably large to substantially ensure the brazing area. This is because jointing with an insufficient brazing area results in an insufficient jointing strength, the cutting blade cannot endure the use as a cutting tool. Therefore, a cutting tool such as a planer knife brazed with a wire-like cutting blade with a small cross-sectional area has not been put into practical use.

In conceiving the present invention, the present inventor of the present application conducted the following experiment to confirm the correlation between cracks/strain which would occur at the time of welding a cutting blade formed of a sintered hard material to a base formed of a steel, and the cross-sectional area of the cutting blade.

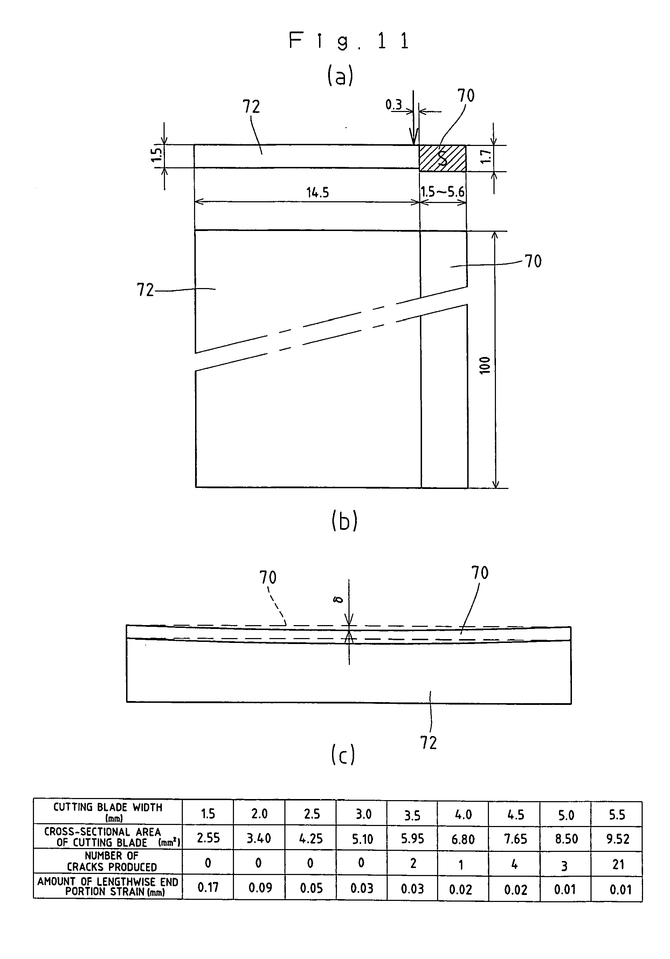

### (Welding conditions) See Fig. 11(a).

Base: annealing material of carbon steel S45C
length of 100, width of 14.5, thickness of 1.5 (mm)

Cutting Blade: cemented carbide K30 (Type K of JIS B 4053)
length of 100, width of 1.5 to 5.6, thickness of 1.7 (mm)

Laser device: CW laser, output of 1.3 kW and feeding speed of 1.5 m/min.

That is, cutting blades 70 of different cross-sectional areas (cutting blade cross-sectional area S) were laser-welded to a base 72, and were left to be cooled at room temperature after which the number of cracks produced on the cutting blade 70 and the amount δ of lengthwise end edge portion strain (see Fig. 11(b)) were measured. At the time of welding, the base 70 and the cutting blades 72 were securely held by a clamping device. The measuring results acquired in the experiment are shown in Fig. 11(c).

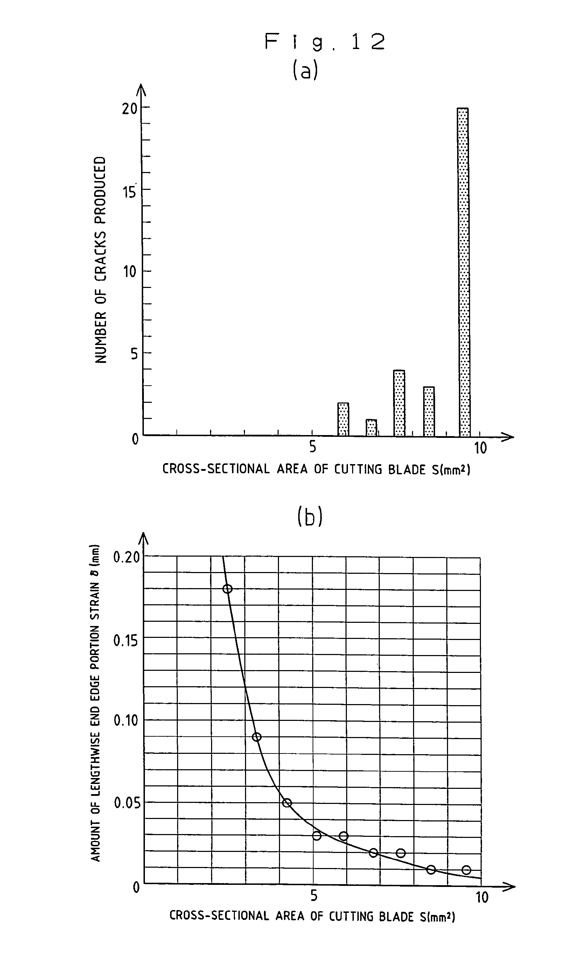

Graphs shown in Figs. 12(a) and 12(b) were obtained from the measuring results. The bar graph shown in Fig. 12(a) represents the number of cracks produced on the cutting blade 70 in each cutting blade cross-sectional area S. It is apparent from the graph that with the cutting blade cross-sectional area S of 2.55 mm² to 5.1 mm², cracks are not produced, whereas when the cutting blade cross-sectional area S is 5.95 mm² or larger, the number of cracks produced increases according to the size of the cutting blade cross-sectional area S. The graph shown in Fig. 12(b) represents the relationship between each cutting blade cross-sectional area S and the amount δ of lengthwise end edge portion strain. It is apparent from the graph that as the cutting blade cross-sectional area S becomes smaller, the amount δ of lengthwise end edge portion strain increases considerably. That is, it can be inferred that the amount δ of lengthwise end edge portion strain is inversely proportional to the cutting blade cross-sectional area S.

Next, the present inventor conducted the experiment with the width of the base 72 changed while setting the cutting blade 70 to have a length of 100 mm, a width of 3.0 mm and a thickness of 1.7 mm (cutting blade cross-sectional area S=5.1 mm²) and the base 72 to have a length of 100 mm, a width of 5 to 30 mm and a thickness of 1.5 mm. As a result, occurrence of cracks on the cutting blade 70 was not confirmed and only occurrence of lengthwise end edge portion strain was confirmed.

The present inventor believes from the results of the experiment that if the cutting blade cross-sectional area S of the cutting blade 70 is about 5.0 mm², laser welding is possible without producing cracks on the cutting blade 70. The present invention has been made on the belief that if suppression of strain (particularly, lengthwise end edge portion strain) which increases as the cutting blade cross-sectional area S becomes smaller is successful, the use of an expensive sintered hard material can be reduced significantly, and can be sufficiently applied to a plate-like cutting tool like a planer knife. That is, the present invention has been proposed to adequately solve the problems inherent in the conventional art, and it is an object to provide a plate-like cutting tool whose manufacturing cost can be made low, and which suppresses strain caused by a difference in coefficient of thermal expansion and is free of cracks. It is another object to provide a fixing jig which can reduce occurrence of strain and cracks at the time of welding a plate-like cutting tool.

### Means for Solving the Problems

To overcome the problems and achieve the objects, a plate-like cutting tool according to claim 1 is characterized in that a rectangular plate-like base formed of a steel to be a base portion, and cutting blades extending along end edge portions of the base in a lengthwise direction thereof and formed of a sintered hard material to be blade portions are securely fixed by welding layers in which essentially the base is melted by a high-power beam of a laser or the like, and cutting edges are formed in such a way that cross-sectional areas of the cutting blades are set to 0.5 to 5.0 mm².

According to the present invention as set forth in claim 1, the linear cutting blade having a minimum cross-sectional area needed (5.0 mm² or less) and the base are separate parts, so that if the base portion is made of a low-cost material, the overall manufacturing cost of the cutting tool can be reduced. As the cutting blade is fixed by the welding layer in which mainly the base portion is melted by a laser, the amount of heat input at the time of welding can be made as small as possible, thus suppressing the influence of thermal expansion.

According to the present invention as set forth in claim 2, the cutting blades are securely fixed to both end edge portions of the base in the lengthwise direction thereof facing a short-side direction.

According to the present invention as set forth in claim 2, as the cutting blades are securely fixed to both sides of the base, the directions of strain originated from thermal expansion are balanced with each other, making it possible to further suppress overall deformation (strain) of the cutting tool.

According to the present invention as set forth in claim 3, an engagement section is provided at a center portion of the base in a short-side direction.

According to the present invention as set forth in claim 3, the engagement section can be engaged with the fixing jig that fixes the base at the time of welding, so that lengthwise end edge portion strain of the base which is caused by a change in temperature in heating/cooling can be suppressed.

According to the present invention as set forth in claim 4, the engagement section comprises a recess or a projection extending continuously or discontinuously on one side of the base in the lengthwise direction thereof.

According to the present invention as set forth in claim 4, as the recess or the projection is formed on one side of the base, the fixing jig can be engaged with the recess or the projection. Therefore, the entire base in the lengthwise direction can be fixed in the engaged state, making it possible to suppress lengthwise end edge portion strain of the base.

According to the present invention as set forth in claim 5, the engagement section comprises a plurality of through holes provided apart from one another in the base at predetermined intervals in the lengthwise direction thereof, penetrating the base in a thicknesswise direction.

According to the present invention as set forth in claim 5, a plurality of through holes penetrating the base in the thicknesswise direction are provided in the base at predetermined intervals in the lengthwise direction thereof, the fixing jig can be engaged with the through holes. Therefore, the entire base in the lengthwise direction can be fixed in the engaged state, making it possible to suppress lengthwise end edge portion strain of the base.

According to the present invention as set forth in claim 6, fixing of the cutting blade is performed with strain occurrence suppressed by holding the base from a thicknesswise direction with a base supporting section, which engages with the engagement section via a to-be-engaged portion, and a base fixing tool, while engaging the engagement section with the to-be-engaged portion.

According to the present invention as set forth in claim 6, as the cutting blade is laser-welded to the base held by the base supporting section having the to-be-engaged portion engaged with the engagement section, and the base fixing tool, deformation of the base at the time of welding or cooling is reduced, thus making it possible to suppress overall strain of the cutting tool.

To overcome the problems and achieve the objects, a fixing jig according to claim 7 fixes a rectangular plate-like base and a cutting blade formed of a sintered hard material at a time of securely fixing the cutting blade to the base, and comprises:
a base supporting section provided at a base body, extending in a lengthwise direction of the base and engaged with engagement sections, provided at the base, via to-be-engaged portions to support one side of the base;
a first base fixing tool detachably mounted to one of short-side directional sides of the base body with the base supporting section in between, and abutting press sections, provided at predetermined intervals in a lengthwise direction, on an other side of the base supported by the base supporting section, so that the base is heldable between the first base fixing tool and the base supporting section;
a second base fixing tool detachably mounted to the other one of short-side directional sides of the base body and abutting press sections, provided at predetermined intervals in the lengthwise direction, on the other side of the base supported by the base supporting section at a portion which does not interfere with the press sections of the first base fixing tool; and
a cutting blade fixing tool detachably mounted to either the one or the other one of short-side directional sides of the base body with the base supporting section in between where the base fixing tool is not mounted, and positioning and fixing the cutting blades abutting on end edge portions along the lengthwise direction of the base held by the first or second base fixing tool and the base supporting section,
wherein with the base held by the first base fixing tool mounted to one side of the base body, and the base supporting section, the cutting blade is positioned and fixed with the cutting blade fixing tool mounted to the other side of the base body, then the second base fixing tool is mounted to the other side of the base body with the cutting blade fixing tool removed therefrom to hold the base with the base supporting section, after which the first base fixing tool is removed to thereby keep the base held, and the cutting blade is positioned and fixed with the cutting blade fixing tool mounted to one side of the base body with the first base fixing tool removed therefrom, thereby suppressing deformation of the base caused by a work of fixing the cutting blades to both end edge portions.

According to the present invention as set forth in claim 7, after the cutting blade is fixed to one of the end edge portions of the base along the lengthwise direction thereof, the state in which the base is held by the base fixing tool and the base supporting section can be maintained at the time of fixing the cutting blade to the other one of the end edge portions. This reduces deformation of the base which is caused by a change in temperature in welding/cooling, so that overall strain of the cutting tool can be suppressed without producing cracks in the cutting blades.

### Advantageous Effect of the Invention

According to the plate-like cutting tool of the present invention, the manufacturing cost can be reduced and overall strain of the cutting tool can be suppressed within a strain correctable range, and cracks are not produced in the cutting blade even after strain correction and an accurate work is possible. According to the fixing jig of the present invention, strain of the base which is caused at the time of welding and cooling can be suppressed within a strain correctable range.

### Brief Description of Drawings

Fig. 1 is a front view showing a planer knife according to an embodiment.
Fig. 2 is a schematic perspective view of the planer knife according to the embodiment.
Fig. 3 is a perspective view showing a fixing jig according to an embodiment.
Fig. 4 is a front view showing the fixing jig according to the embodiment.
Fig. 5 is a plan view showing the fixing jig according to the embodiment.
Fig. 6 is a front view showing a base before welding.
Fig. 7 is a front view showing a cutting blade and a base before welding.
Fig. 8 is a front view showing the planer knife immediately after welding.
Fig. 9 is a schematic perspective view showing a planer knife and a base supporting section according to a modification.
Fig. 10 is a schematic perspective view showing a planer knife and a base supporting section according to another modification.
Fig. 11 is a diagram showing an example of an experiment and experimental results, (a) showing a base and cutting blade to be welded, (b) showing an explanatory diagram of lengthwise end edge portion strain, (c) presenting a table showing measuring results.
Fig. 12 is a graph showing the experimental results, (a) showing the number of cracks produced in the cross section of each cutting blade, (b) showing the amount of lengthwise end edge portion strain versus the cross section of the cutting blade.

### Best Mode for Carrying Out the Invention

A plate-like cutting tool and a fixing jig according to the present invention will be described below by way of preferred embodiments with reference to the accompanying drawings. While the description is given on the assumption that the plate-like cutting tool is a planer knife, the plate-like cutting tool according to the present invention is not limited to a planer knife, and can be used as other cutting tools.

### Embodiments

### (Planer Knife)

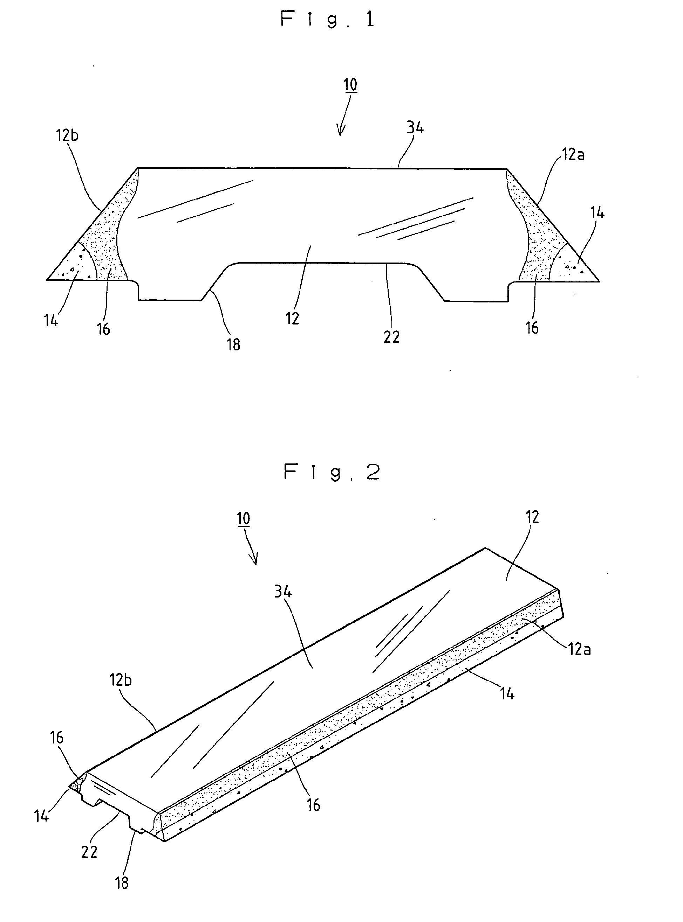

A planer knife (plate-like cutting tool) 10 according to an embodiment, as shown in Figs. 1 and 2, includes a base 12 to be the base portion of the planer knife 10, cutting blades 14, 14 laser-welded to the base 12, and welding layers (beads) 16, 16 which are produced at the time of welding the cutting blades 14, 14 to the base 12. The base 12 is made by forming a steel material, such as a tool steel or structural steel, into a rectangular plate shape, and the linear cutting blades 14, 14 having cross-sectional areas of about 2.0 to 5.0 mm² are laser-welded to end edge portions (lengthwise end edge portions 12a, 12b) of one of both sides along the lengthwise direction thereof, e.g., a back side 18. The cutting blades 14 are formed as a sintered hard material, such as a cemented carbide or polycrystalline diamond sintered material, is laser-welded to the both lengthwise end edge portions 12a, 12b, and are then polished, forming cutting edges serving as the blade portions of the planer knife 10. As will be described later, at the time of welding the cutting blade 14 to the base 12, a high-power density beam 56 is irradiated from laser irradiation source 54 on the contact portion between the base 12 and the cutting blade 14 mainly on the base 12 side to melt the portion, so that the melted portion becomes the welding layer 16 to securely fix the cutting blade 14 to the base 12. The "cross-sectional area" used herein indicates a cross-sectional area when the cutting blade 14 is longitudinally cut in a direction perpendicular to the lengthwise direction thereof (see cutting blade 14 in Fig. 1). The reason for using the linear cutting blade 14 having a cross-sectional area of about 2.0 to 5.0 mm² is used as mentioned above because it is necessary to set the cross-sectional area to approximately 0.5 mm² or larger when the cutting blade 14 after welding is polished to form a cutting edge. It is to be noted however that a wire material with a large cross-sectional area is likely to have cracks produced at the time of welding, and can be a factor to increase the cost, so that the cutting blade 14 with a cross-sectional area of 3.0 mm² or smaller is preferable. If the cross-sectional area of the cutting blade 14 becomes 0.5 mm² or smaller when the cutting edge is formed, the durability as the blade portion is not obtained, it is preferable to set the cross-sectional area of the cutting blade 14 after polishing (after forming the cutting edge) to 1.0 mm² or larger.

A recess (engagement section) 22 which engages with a fixing jig 20 to be described later is formed in the back side (one side) 18 of the base 12. The recess 22 is formed like a groove continuously extending over the entire base 12 in the lengthwise direction at a center portion in a short-side (widthwise) direction thereof, and serves to suppress deformation of the base 12 when being engaged with a base supporting section 24 (to be described later) of the fixing jig 20. Although the recess 22 is formed continuously in the back side 18 of the base 12 in the embodiment, a plurality of recesses may be provided in the back side 18 of the base 12 in the lengthwise direction at predetermined intervals (discontinuously).

### (Fixing Jig)

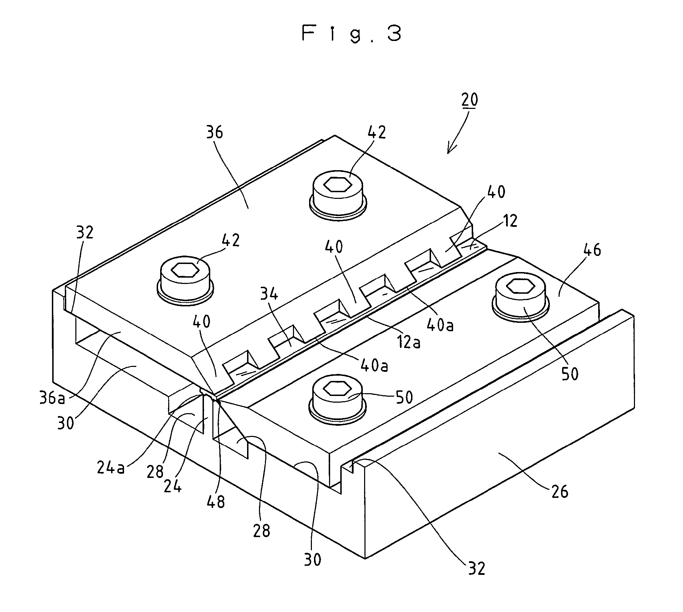

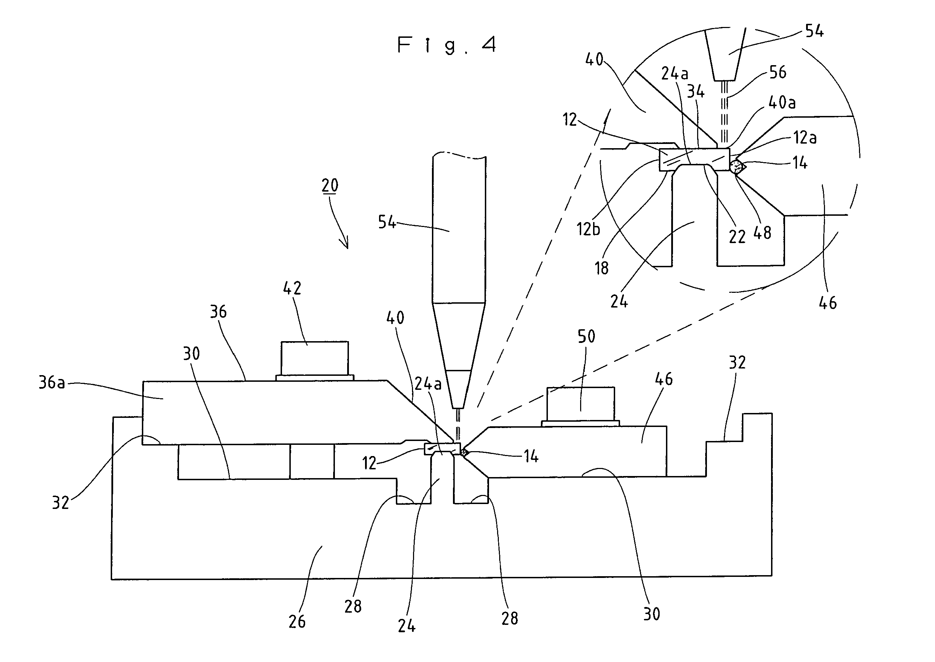

The fixing jig 20 which is used to support and fix the planer knife 10 at the time of laser welding has a rigid base body 26 integrated with the base supporting section 24 provided at a widthwise center position of the base body 26, as shown in Figs. 3 to 5. As shown in Fig. 4, on the base body 26, second bottom portions 30 and third bottom portions 32 are respectively formed on right and left sides of a first bottom portion 28 formed deepest at a widthwise center portion, leveled up by one step each, thereby forming a bilaterally symmetrical step-like structure.

The base supporting section 24 is formed to protrude from the first bottom portion 28 of the base body 26 by a required height, and a to-be-engaged portion 24a formed to have an approximately same cross-sectional shape as the recess 22 of the planer knife 10 so as to engage with the recess 22 is provided at a top portion of the base supporting section 24. The lengthwise dimensions of the base supporting section 24 are set equal to or slightly larger than lengthwise dimensions of the planer knife 10, so that the base supporting section 24 can be engaged with the entire recess 22 of the planer knife 10. That is, as shown in Fig. 4, with the entire recess 22 engaged with the to-be-engaged portion 24a, the planer knife 10 is supported on the base supporting section 24. The height of the base supporting section 24 is set so that with the planer knife 10 supported on the to-be-engaged portion 24a, a surface (other side) 34 of the planer knife 10 (base 12) is approximately level with the height of the third bottom portions 32.

The fixing jig 20 according to an embodiment has a first base fixing tool (base fixing tool) 36 and a second base fixing tool (base fixing tool) 38 detachably mounted on the base body 26, and those first and second base fixing tools 36, 38 are mounted to the base body 26 to hold the base 12 with the base supporting section 24 from the thicknesswise direction. That is, the first and second base fixing tools 36, 38 are mounted opposite to the lengthwise end edge portions 12a, 12b of the base 12, supported by the base supporting section 24 of the base body 26, on the welding side of the cutting blades 14, and the base 12 is held and fixed by one of the first and second base fixing tools 36, 38 and the base supporting section 24. In the following description, the left side to the base supporting section 24 in Fig. 4 is called one (one side), the right side is called the other (other side), and the first base fixing tool 36 is detachably mounted to one side while the second base fixing tool 38 is detachably mounted to the other side.

The first base fixing tool 36 is used at the time of welding the cutting blade 14 to the other lengthwise end edge portion 12a of the base 12, and a plurality of press sections 40 having a downward inclined cross section are formed at a side edge portion of the other side of a fixing jig body 36a formed like a plate at predetermined intervals along the lengthwise direction of the fixing jig body 36a (see Fig. 3). With first base fixing tool 36 mounted to the base body 26, the press sections 40 abut on the surface 34 of the base 12 supported on the base supporting section 24 to press the base 12 downward. At the time of mounting the first base fixing tool 36 to the base body 26, the fixing jig body 36a is placed on the third bottom portions 32 on one side, and the press sections 40 are placed on the base 12 and fastened there by a pair of fixing bolts 42, 42.

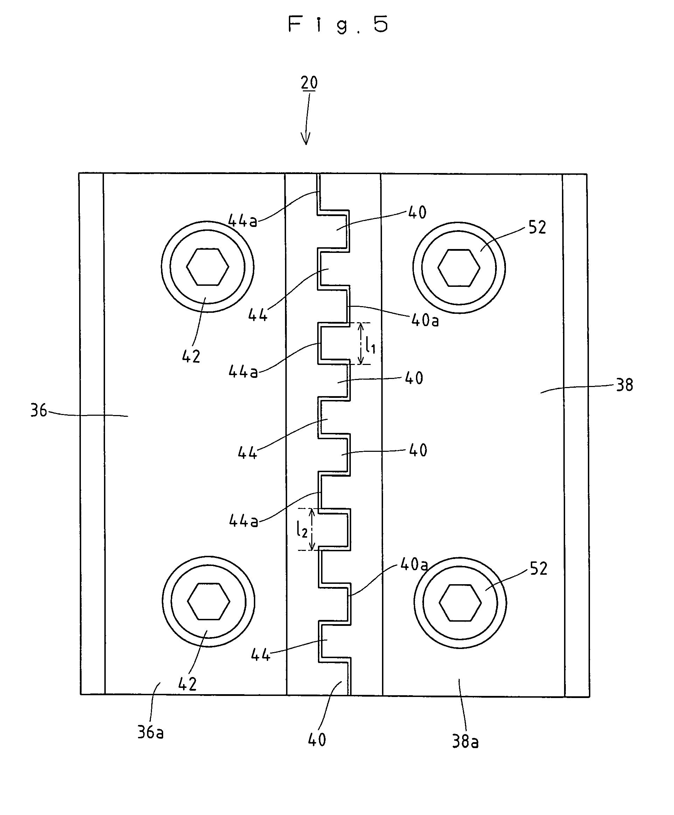

As shown in Fig. 4, when the first base fixing tool 36 is mounted to the base body 26, the press sections 40 do not completely cover the surface 34 of the base 12, but the other lengthwise end edge portion 12a is slightly exposed upward. The width of a free end 40a of each press section 40 is set smaller than an interval size l₂ between the press sections 44, 44 of the second base fixing tool 38, and the interval size l₁ between the press sections 40, 40 of the first base fixing tool 36 is set larger than the width of a free end 44a of the press section 44 of the second base fixing tool 38, as shown in Fig. 5.

The second base fixing tool 38 to be used at the time of welding one side of the base 12 has basically the same structure as the first base fixing tool 36 such that a plurality of press sections 44 are provided at the side edge portion of a fixing tool body 38a on its one side along the lengthwise direction at predetermined intervals. The press sections 44 are structured to abut on and press the surface 34 of the base 12 supported on the base supporting section 24 when the second base fixing tool 38 is mounted to the base body 26. As described above, the width of the free ends 44a of the press sections 44 of the second base fixing tool 38 is set smaller than the interval size l₁ between the press sections 40, 40 of the first base fixing tool 36, so that when both of the first and second base fixing tools 36, 38 are mounted to the base body 26 at a time, their press sections 40, 44 face between the opposing press sections 44, 44, 40, 40. That is, when both of the first and second base fixing tools 36, 38 are mounted to the base body 26 at a time, their press sections 40, 44 hold the base 12 with the base supporting section 24 without mutual interference. In a case where the second base fixing tool 38 is mounted to the base body 26, like the first base fixing tool 36, the second base fixing tool 38 is fastened by a pair of fixing bolts 52, 52.

The fixing jig 20 according to the embodiment has a cutting blade fixing tool 46 for supporting the cutting blade 14 with respect to the base 12. The cutting blade fixing tool 46 is configured to be mounted onto the second bottom portion 30 on the corresponding other side to support and fix the whole cutting blade 14 with the cutting blade 14 abutting on the other lengthwise end edge portion 12a, for example, at the time of welding the cutting blade 14 to the other lengthwise end edge portion 12a of the base 12. As shown in Fig. 4, a side portion of the cutting blade fixing tool 46 on one side is formed to have a mountain-like shape on the top of which a cutaway portion 48 which can hold the cutting blade 14 is provided. That is, when the cutting blade fixing tool 46 is mounted to the other side of the base body 26, for example, the cutaway portion 48 faces the lengthwise end edge portion 12a in the proximity thereof so that the cutting blade 14 is held between the cutaway portion 48 and the lengthwise end edge portion 12a. The cutting blade fixing tool 46 is configured in such a way that as the cutting blade fixing tool 46 is slightly slid in the direction of approaching the base supporting section 24 at the time of being mounted to the base body 26, the cutting blade 14 is pressed and fixed to the base 12. Therefore, an operator inserts the cutting blade 14 between the base 12 and the cutaway portion 48, and slides the cutting blade fixing tool 46 toward the base 12 to fix the cutting blade 14. The cutting blade fixing tool 46, like the first and second base fixing tools 36, 38, is fastened by a pair of fixing bolts 50, 50. At the time the cutting blade 14 is welded to the one lengthwise end edge portion 12b of the base 12, the cutting blade fixing tool 46 is mounted onto the second bottom portion 30 on one side.

### (Manufacture of Planer knife)

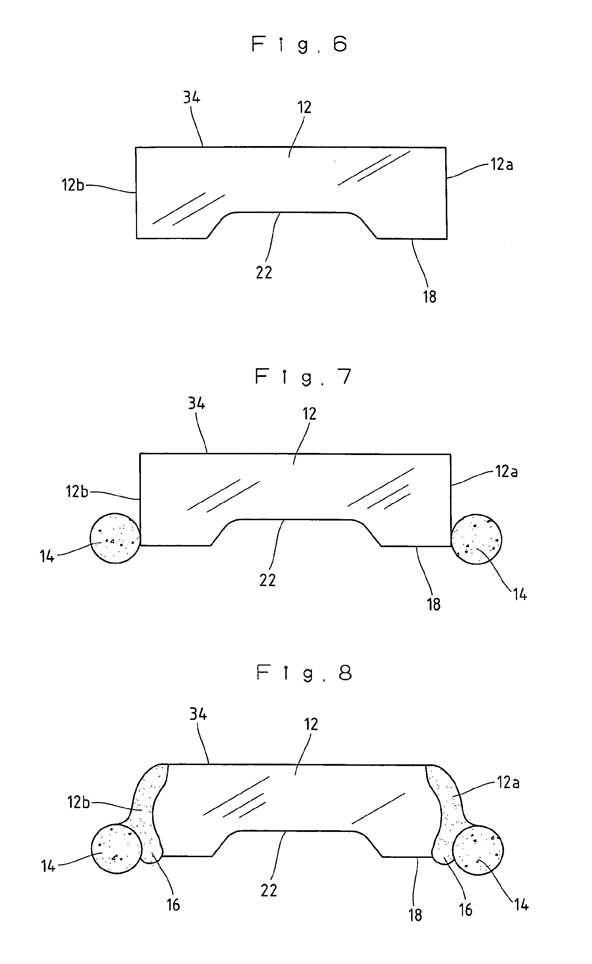

Next, a process of manufacturing the planer knife 10 using the fixing jig 20 according to the embodiment will be described. To begin with, as shown in Fig. 6, the groove-like recess 22 is formed at the entire back side 18 of the base 12, made of a steel having a rectangular cross section, in the lengthwise direction. At this time, the recess 22 is formed so as to be positioned in the widthwise center of the back side 18. Next, with the first base fixing tool 36 and the cutting blade fixing tool 46 removed from the fixing jig 20, the base 12 is placed on the base supporting section 24. At this time, the to-be-engaged portion 24a of the base supporting section 24 is tightly engaged with the recess 22, positioning in the widthwise direction of the base 12 entirely over the lengthwise direction.

Next, a description will be given of a case of welding the cutting blade 14 to the other lengthwise end edge portion 12a of the base 12. First, the first base fixing tool 36 is placed on the third bottom portion 32 on the other side, and are fastened onto the base body 26 by the fixing bolts 42, 42 with the press sections 40 caused to abut on the surface 34 of the base 12. At this time, as shown in Fig. 3, the first base fixing tool 36 has a plurality of press sections 40 pressing the whole base 12 in the lengthwise direction.

Next, the cutting blade 14 is fixed via the cutting blade fixing tool 46. That is, the cutting blade fixing tool 46 is temporarily fastened to the second bottom portion 30 on the other side so that the cutaway portion 48 faces the base 12. Then, the cutting blade 14 is inserted between the base 12 and the cutaway portion 48, and the cutting blade fixing tool 46 is slid toward the base 12 and fixed by the fixing bolts 50, 50 with the cutting blade 14 abutting on the lengthwise end edge portion 12a with a predetermined pressure. This causes the cutting blade 14 to be positioned and fixed in abutment on the other lengthwise end edge portion 12a of the base 12. As shown in Fig. 4, the contact portion between the cutting blade 14 and the lengthwise end edge portion 12a is exposed upward. As shown in Fig. 7, the cutting blade 14 before welding is generally formed into a rod shape by forming a sintered hard material to have, for example, a circular cross section. It is to be noted that the cross section of the cutting blade 14 should not necessarily be circular, and may be triangular, rectangular and so forth.

Then, the base 12 is held and fixed by the first base fixing tool 36 and the base supporting section 24, and with the cutting blade 14 fixed by the cutting blade fixing tool 46, the cutting blade 14 and the lengthwise end edge portion 12a are welded. The welding is carried out by laser welding which can ensure pin-point heating to suppress deformation or strain of the base 12 and the cutting blade 14, thus reducing the amount of welding heat input as much as possible as a consequence. As shown in Fig. 4, a laser irradiation apparatus which can irradiate a high-power density beam 56, such as a CO₂ laser or YAG laser, is particularly preferably used as a laser irradiation source 54. The high-power density beam 56 is irradiated to the contact portion between the other lengthwise end edge portion 12a and the cutting blade 14, mainly the base 12 side, to melt the base 12. Accordingly, as shown in Fig. 8, a part of the base 12 melted by the laser is adhered to the cutting blade 14, and becomes the welding layer 16 and solidified after being cooled, thus achieving welding of the cutting blade 14. That is, the base supporting section 24 is engaged with the recess 22 and the first base fixing tool 36 holds and fixes the base 12 pressed from above, so that heat-originated deformation of the base 12 can suitably be suppressed. In addition, welding with a high condensive laser reduces the amount of welding heat input to the base 12, making it possible to further reduce the thermal expansion of the base 12. What is more, because the entire cutting blade 14 in the lengthwise direction is always supported and fixed by the cutting blade fixing tool 46, reliable welding can be executed, making it possible to further suppress strain of the cutting blade 14 itself.

To weld the one lengthwise end edge portion 12b to the cutting blade 14 after welding of the other lengthwise end edge portion 12a is completed, first, the cutting blade fixing tool 46 is removed from the base body 26. Then, with the first base fixing tool 36 stayed mounted, the second base fixing tool 38 is fixed to the base body 26. That is, the second base fixing tool 38 is placed on the third bottom portion 32 on the other side, and with each press section 44 set facing between the press sections 40, 40 of the first base fixing tool 36, the second base fixing tool 38 is mounted to the other side of the base body 26. At this time, as shown in Fig. 5, the entire base 12 is held with the base supporting section 24 by the first and first base fixing tools 36, 38. Next, the fixing bolts 42, 42 are removed to dismount the first base fixing tool 36 from the base body 26, the cutting blade fixing tool 46 is mounted to one side of the base body 26 to make the cutting blade 14 abut on the one lengthwise end edge portion 12b of the base 12. Then, the cutting blade 14 is laser-welded to the one lengthwise end edge portion 12b to attach the cutting blade 14 in the above-described manner.

When welding to both lengthwise end edge portions 12a, 12b is completed, the second base fixing tool 38 and the cutting blade fixing tool 46 are left mounted for a while to be cooled, so that the welding layers 16, 16 of both lengthwise end edge portions 12a, 12b are securely adhered to the cutting blades 14, 14 as shown in Fig. 8. After cooling, both lengthwise end edge portions 12a, 12b are subjected to the strain correction and polishing to form cutting edges, completing the planer knife 10 as shown in Fig. 1. Because the base 12 is always fixed held by the first and second base fixing tools 36, 38 and the base supporting section 24 from welding to cooling, heating- or cooling-originated deformation (lengthwise end edge portion strain) of the base 12 can be suppressed suitably. If the base 12 made of a relatively low cost steel is used, therefore, the strain-suppressed planer knife 10 can be manufactured, making it possible to suppress the manufacturing cost.

As illustrated above, the planer knife 10 according to the embodiment has the cutting blades 14, 14 and the base 12 as separate structures, so that the use of a relatively low cost material, such as steel, for the base 12 can make the overall manufacturing cost of the planer knife 10 low. In addition, because the cutting blades 14, 14 provided at both lengthwise end edge portions 12a, 12b are securely adhered by the welding layers 16, 16 which are mainly the base 12 melted by laser welding, the amount of heat input at the time of welding can be reduced as much as possible, thus suppressing the influence of thermal expansion. The provision of the cutting blades 14, 14 at both lengthwise end edge portions 12a, 12b makes the directions of strain by thermal expansion opposing to each other to be balanced, so that the overall deformation of the planer knife 10 can be further suppressed.

Further, the recess 22 is formed in the back side 18 of the base 12 in the planer knife 10 according to the embodiment, so that the fixing jig 20 can be engaged with the recess 22. Therefore, the base 12 can be fixed engaged entirely in the lengthwise direction of the base 12, making it possible to suppress strain caused at the time of welding of the base 12. That is, as the recess 22 is engaged with the base supporting section 24 and is further pressed by the first and second base fixing tools 36, 38, welding can be carried out with the base 12 surely held and fixed, making it possible to suppress deformation which leads to warping or bending of the base 12.

In accordance with the fixing jig 20 according to the embodiment, the base 12 can be supported by the base supporting section 24 and further can be fixed pressed by the first and second base fixing tools 36, 38, so that the base 12 can be always fixed at the time of welding and cooling, making it possible to suppress deformation of the base 12. Because the whole cutting blade 14 is fixed in abutment on the base 12 with a required pressure, the cutting blade 14 can be welded reliably, making it possible to suppress strain of the cutting blade 14.

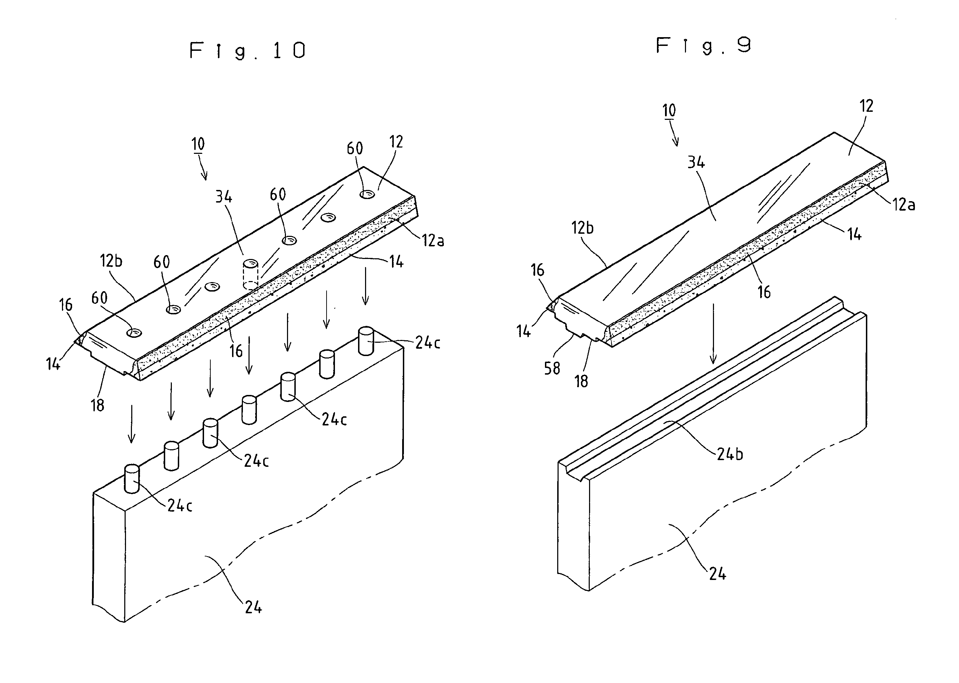

Although the recess 22 is formed in the back side 18 of the base 12 and is engaged with the base supporting section 24 in the embodiment, a projection 58 extending over the entire back side 18 in the lengthwise direction may be used as the engagement section, for example, as shown in Fig. 9. In this case, the to-be-engaged portion of the base supporting section 24 is formed as a recessed portion 24b which can engage with the projection 58. Instead of forming the projection 58 continuously on the back side 18 of the base 12, a plurality of projections 58 may be provided at predetermined intervals (discontinuously) along the lengthwise direction. Further, as shown in Fig. 10, a plurality of through holes 60 provided at predetermined intervals along the lengthwise direction of the plate surface of the base 12 may be used as the engagement section of the base 12. The individual through holes 60 pierce the plate surface of the base 12 in the widthwise direction, so that the to-be-engaged portion of the base supporting section 24 is inserted therein to be engaged therewith. In this case, the to-be-engaged portion of the base supporting section 24 is formed by a plurality of projecting portions 24c insertable in the respective through holes 60. The height of each projecting portion 24c is set so that the projecting portion 24c does not protrude from the surface 34 the base 12 when inserted in the through hole 60. Accordingly, the projecting portions 24c do not interfere with the base fixing tool 36 when the base 12 is fixed by the base fixing tool 36 of the fixing jig 20.

Further, while the planer knife 10 according to the embodiment illustrated has the cutting blades 14, 14 provided at both lengthwise end edge portions 12a, 12b, the plate-like cutting tool according to the present invention may have the cutting blade 14 formed at one of the lengthwise end edge portions. Although the description of the embodiment has been given of the case where the fixing jig 20 fixes the planer knife 10, it can be used to fix other plate-like cutting tools. Further, although the description of the embodiment has been given of the case where one lengthwise end edge portion 12b (left-hand side in Fig. 4) is welded after the cutting blade 14 is welded to the other lengthwise end edge portion 12a (right-hand side in Fig. 4), it is of course possible to weld one lengthwise end edge portion 12b first.

## Claims

1. A plate-like cutting tool **characterized in that** a rectangular plate-like base (12) formed of a steel to be a base portion, and cutting blades (14, 14) extending along end edge portions (12a, 12b) of the base (12) in a lengthwise direction thereof and formed of a sintered hard material to be blade portions are securely fixed by welding layers (16, 16) in which essentially the base (12) is melted by a high-power beam including a laser, and cutting edges are formed in such a way that cross-sectional areas of the cutting blades (14, 14) are set to 0.5 to 5.0 mm².

2. The plate-like cutting tool according to claim 1, wherein the cutting blades (14, 14) are securely fixed to both end edge portions (12a, 12b) of the base (12) in the lengthwise direction thereof facing a short-side direction.

3. The plate-like cutting tool according to claim 1 or 2, wherein an engagement section is provided at a center portion of the base (12) in a short-side direction.

4. The plate-like cutting tool according to claim 3, wherein the engagement section comprises a recess (22) or a projection (58) extending continuously or discontinuously on one side (18) of the base (12) in the lengthwise direction thereof.

5. The plate-like cutting tool according to claim 3, wherein the engagement section comprises a plurality of through holes (60) provided apart from one another in the base (12) at predetermined intervals in the lengthwise direction thereof, penetrating the base (12) in a thicknesswise direction.

6. The plate-like cutting tool according to claim 3, wherein fixing of the cutting blade (14, 14) is performed with strain suppressed by holding the base (12) from a thicknesswise direction with a base supporting section (24), which engages with the engagement section via a to-be-engaged portion (24a, 24b, 24c), and a base fixing tool (36, 38), while engaging the engagement section with the to-be-engaged portion (24a, 24b, 24c).

7. A fixing jig for fixing a rectangular plate-like base (12) and a cutting blade (14) formed of a sintered hard material at a time of securely fixing the cutting blade (14) to the base (12), comprising:
a base supporting section (24) provided at a base body (26), extending in a lengthwise direction of the base (12) and engaged with engagement sections (22, 58, 60), provided at the base (12), via to-be-engaged portions (24a, 24b, 24c) to support one side (18) of the base (12);
a first base fixing tool (36) detachably mounted to one of short-side directional sides of the base body (26) with the base supporting section (24) in between, and abutting press sections (40), provided at predetermined intervals in a lengthwise direction, on an other side (34) of the base (12) supported by the base supporting section (24), so that the base (12) is heldable between the first base fixing tool (36) and the base supporting section (24);
a second base fixing tool (38) detachably mounted to the other one of short-side directional sides of the base body (26) and abutting press sections (44), provided at predetermined intervals in the lengthwise direction, on the other side (34) of the base (12) supported by the base supporting section (24) at a portion which does not interfere with the press sections (40) of the first base fixing tool (36); and
a cutting blade fixing tool (46) detachably mounted to either the one or the other one of short-side directional sides of the base body (26) with the base supporting section (24) in between where the base fixing tool (36, 38) is not mounted, and positioning and fixing the cutting blades (14, 14) in an abutting state on end edge portions (12a, 12b) along the lengthwise direction of the base (12) held by the first or second base fixing tool (36, 38) and the base supporting section (24),
wherein with the base (12) held by the first base fixing tool (36) mounted to one side of the base body (26), and the base supporting section (24), the cutting blade (14) is positioned and fixed with the cutting blade fixing tool (46) mounted to the other side of the base body (26), then the second base fixing tool (38) is mounted to the other side of the base body (26) with the cutting blade fixing tool (46) removed therefrom to hold the base (12) with the base supporting section (24), after which the first base fixing tool (36) is removed to thereby keep the base (12) held, and the cutting blade (14) is positioned and fixed with the cutting blade fixing tool (48) mounted to one side of the base body (26) with the first base fixing tool (38) removed therefrom, thereby suppressing occurrence of deformation of the base caused by a work of fixing the cutting blades to both end edge portions (12a, 12b).
